Europäisches Patentamt

European Patent Office

Office européen des brevets

(11) Veröffentlichungsnummer: **0 158 929**
**B1**

(12) **EUROPÄISCHE PATENTSCHRIFT**

(45) Veröffentlichungstag der Patentschrift: **12.09.90**

(51) Int. Cl.⁵: **G 01 N 29/04**

(21) Anmeldenummer: **85104040.2**

(22) Anmeldetag: **03.04.85**

(54) **Verfahren zur Ultraschall-Prüfung von Bolzen mit einem Wanddickensprung.**

(30) Priorität: **16.04.84 DE 3414362**

(43) Veröffentlichungstag der Anmeldung:
**23.10.85 Patentblatt 85/43**

(45) Bekanntmachung des Hinweises auf die
Patenterteilung:
**12.09.90 Patentblatt 90/37**

(84) Benannte Vertragsstaaten:
**CH DE LI SE**

(56) Entgegenhaltungen:
**DE-A-2 600 246**

**KRAUTKRAEMER J., KRAUTKRAEMER H.,
"Werkstoffprüfung mit Ultraschall" 4. Auflage,
1980 SPRINGER VERLAG Berlin-Heidelberg-
New York**

(73) Patentinhaber: **Siemens Aktiengesellschaft
Wittelsbacherplatz 2
D-8000 München 2 (DE)**

(72) Erfinder: **Kröning, Michael, Dr. Dipl.-Phys.
Eichenring 3
D-8551 Röttenbach (DE)**
Erfinder: **Hölzler, Georg, Dipl.-Ing.
Kellergasse 18
D-8521 Möhrendorf (DE)**
Erfinder: **Heumüller, Roland, Dr. Dipl.-Phys.
Meisenweg 50
D-8520 Erlangen (DE)**

Courier Press, Leamington Spa, England.

# Beschreibung

Die Erfindung betrifft ein Verfahren zur Ultraschall-Prüfung von Bolzen mit einem Wanddickensprung auf von diesem ausgehende Anrisse mit einem Sender und einem Empfänger für Ultraschallwellen.

Solche Anrisse waren bisher nur zu ermitteln, wenn die Ultraschall-Prüfung von der durch den Wanddickensprung bestimmten dünneren Seite des Bolzens aus erfolgen konnte, weil sonst der Wanddickensprung mit seinen großen Ultraschallechos die verhältnismäßig kleinen Echosignale von Anrissen abgeschattet und verfälscht hat. Da jedoch besonders in kerntechnischen Anlagen Prüfungen im strahlengefährdeten Bereich, zum Beispiel wegen der Fernbedienung, oft nur von der dickeren Seite des Bolzens aus vorgenommen werden könne, ist es die Aufgabe der Erfindung, Anrisse an Bolzen mit einem Wanddickensprung von der dickeren Seite des Bolzens aus festzustellen. Allgemeine Verfahren zur Ultraschall-Prüfung von Bolzen sind im Dokument: "Werkstoff-Prüfung mit Ultraschall", J. Krautkrämer et al., Seiten 372—374, Springer-Verlag (1980) kurz beschrieben.

Erfindungsgemäß ist einmal vorgesehen, daß als Sender und Empfänger ein piezoelektrischer Wandler auf der dickeren Seite des Bolzens am Umfang so aufgesetzt wird, daß der Wanddickensprung im Nahfeldbereich liegt, daß mit dem Wandler Longitudinalwellen mit einem Winkel von 55 bis 70° und Transversalwellen mit einem Winkel von 25 bis 35° in Richtung auf den Wanddickenspring eingestrahlt werden und daß die Intensität der reflektierten Transversalwellen und Longitudinalwellen mit einer Echokennlinie verglichen wird, die mit einem dem zu prüfenden Bolzen entsprechenden Probekörper mit Anrisse unterschiedlicher Tiefe simulierenden Nuten gewonnen wurde.

Eine andere Lösung der Aufgabe besteht darin, daß ein Tandemprüfkopf mit in Bolzenlängsrichtung hintereinanderliegendem Sender und Empfänger auf der dickeren Seite des Bolzens am Umfang so aufgesetzt wird, daß der Wanddickensprung im Nahfeldbereich des Senders und ein Reflexionspunkt an der gegenüberliegenden Bolzenoberfläche im Nahfeldbereich des Empfängers liegt, daß mit dem Sender Transversalwellen unter einem Winkel von 40 bis 70° in Richtung auf den Wanddickensprung eingestrahlt werden und daß die Intensität einer reflektierten Transversalwelle de Empfängers mit einer Echokennlinie verglichen wird, die mit einem dem zu prüfenden Bolzen entsprechenden Probekörper mit Anrisse unterschiedlicher Tiefe simulierenden Nuten gewonnen wurde.

Die erfindungsgemäßen Verfahren haben sich beide bei Erprobungen ausgezeichnet bewährt, so daß sie in ihrer Empfindlichkeit und Genauigkeit als praktisch gleichwertig angesehen werden können. Auch Anrisse mit Tiefen, die kleiner als die Höhe des Wanddickensprunges sind, waren damit gut feststellbar. Beide Verfahren können vorteilhaft mit einer Vorrichtung ausgeführt werden, die so aufgebaut ist, daß mehrere Prüfköpfe zu einem Ring zusammengefaßt sind, der eine den Bolzen einschließende Öffnung aufweist, daß der Ring Mittel zur Zentrierung an dem Bolzen aufweist, mit denen der Abstand der Prüfköpfe von der Bolzenoberfläche konstant größer als das Doppelte der Wellenlänge gehalten wird, und daß der Ring mit einem Ultraschallprüfgerät über einen Umschalter verbunden ist, der die einzelnen Prüfköpfe anzusteuern gestattet.

Zur näheren Erläuterung der Erfindung werden anhand der beiliegenden Zeichnung zwei Ausführungsbeispiele beschrieben. Dabei zeigen die Fig. 1 und 2 die Prinzipien der neuen Verfahren zur Ultraschallprüfung eines Bolzens mit einem Wanddickensprung, die Fig. 3 stellt die dazu verwendete Echokennlinie dar. In Fig. 4 ist eine Vorrichtung zur Ausübung der erfindungsgmäßen Verfahren schematisiert dargestellt, wobei die beiden Ausführungen der erfindungsgemäßen Verfahren auf unterschiedlichen Seiten angedeutet sind.

Der zu prüfende rotationssymmetrische Bolzen 1 hat einen Wanddickensprung 2 am Übergang von seinem dickeren Teil 3 zum dünneren Teil 4. Es handelt sich zum Beispiel um einen zylindrischen Führungs- oder Haltestift mit einem Durchmesser D von 22 mm. Der dünnere Teil 4 ist ein Gewindezapfen, der einen Durchmesser d von 15 mm mit einem Gewinde M 15 hat.

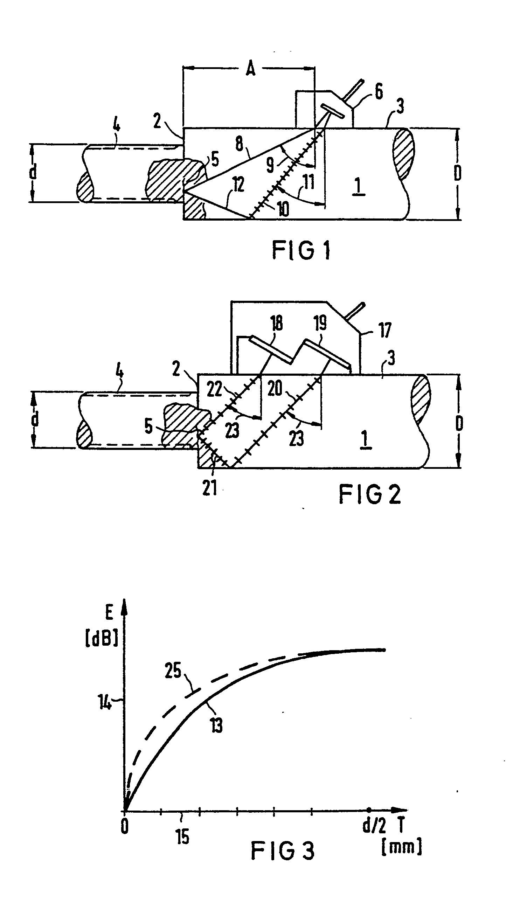

Der Wanddickensprung 2 mit seiner rechtwinkligen Stufung ist durch Anrisse besonders gefährdet, wie sie als Fehler 5 dargestellt sind. Diese Anrisse sollen mit dem Verfahren nach der Erfindung von der dickeren Seite 3 aus ermittelt werden. Dazu wird nach Fig. 1 ein Ultraschallprüfkopf 6 aufgesetzt, der als Sender und Empfänger arbeitet.

Der Ultraschallprüfkopf 6 sitzt mit einer der Oberfläche des Bolzens 1 angepaßten Sohle dicht auf dem Umfang des dickeren Teils 3 des Bolzens 1 auf. Sein Abstand A vom Wanddickensprung 3 ist mit zum Beispiel 21,5 mm so groß gewählt, daß der Wanddickensprung im Nahfeldbereich des Prüfkopfes 6 liegt. Dies gilt für den Longitudinalwellenhauptstrahl 8, der mit einer Frequenz von 4 MHz unter einem Winkel 9 von etwa 65° gegenüber der Senkrechten auf dem Umfang des Bolzens 1 eingestrahlt wird. Der gleichzeitig in den Bolzen 1 einlaufende Transversalwellenhauptstrahl 10 hat dagegen einen Winkel 11 von etwa 30°. Dieser Strahl 10 ist auf die gegenüberliegende Seite des Bolzens 1 gerichtet, so daß durch Wellenumwandlung ein longitudinaler Strahl 12 zustande kommt, der den Anriß 5 erfaßt.

Der am Anriß 5 reflektierte Longitudinalwellenhauptstrahl 8 führt zu einem Transversalwellenecho entsprechend dem eingestrahlten Transversalwellenhauptstrahl 10. In umgekehrter Richtung führt der Transversalwellenhauptstrahl 10 zu einem als Longitudinalwellenstrahl 8 vom Anriß 5 reflektierten Signal. Die Intensität der Signale wird mit der in Fig. 3 dargestellten Echokennlinie 13 verglichen. Dabei ist auf der Ordinate 14 die Echohöhe E in dB dargestellt, auf der Abszisse die Anrißtiefe T in Millimeter. Die Echokennlinie 13 erreicht als Sättigungskurve den maximalen Wert für T=d, d.h. für den völligen Abriß des Gewindezapfens 4.

Bei dem Ausführungsbeispiel nach Fig. 2 erfolgt die Ultraschallmessung mit einem Tandemprüfkopf 17, in dem ein Sender 18 und ein Empfänger 19 für Transversalwellen in Längsrichtung des Bolzens 1 hintereinander angeordnet sind. Die durch die Strahlenteile 20, 21 und 22 angedeuteten Transversalwellen werden unter einem Winkel 23 von 45° gegenüber der Normalen zur Bolzenoberfläche eingeschallt. Die zur Bestimmung der Echointensität als Maß für Anrisse dienende Echokennlinie ist in Fig. 3 mit dem gestrichelten Kurvenzug 25 wiedergegeben, der für T=d wiederum in einen Sättigungsgrenzwert einläuft.

Bei der in Fig. 4 dargestellten Vorrichtung 26 sind zu beiden Seiten der strickpunktierten Mittellinie 27 des Bolzens 1 die beiden Ausführungsmöglichkeiten der erfindungsgemäßen Verfahren mit einer Ringanordnung der Prüfköpfe dargestellt. Die Ringanordnung 28 umfaßt einen Kunststoffring 28A, vorzugsweise aus Plexiglas, mit einer dem Durchmesser D angepaßten Öffnung 29, die zugleich die Zentrierung des Ringes 28 an dem Bolzen 1 bewirkt. Auf dem Kunststoffring 28A sitzt eine Vergußmasse 28B mit Dämpfungseigenschaften. Die gewünschte Lage in Längsrichtung des Bolzens 1 wird durch Anlegen des Ringes 28 an eine Platte 30 erreicht, in der der Gewindezapfen 4 steckt.

In der Vergußmasse 28B sind acht Schwinger um den Umfang der Öffnung 29 gleichmäßig verteilt. Sie sind entweder als Einschwinger-Prüfkopf 6 nach Fig. 1 oder als Tandemanordnung 17 nach Fig. 2 ausgebildet.

Die Prüfkopfe 6, 17 sind über Spulen 31 bzw. 32 zur elektronischen Anpassung an ein Ultraschallgerät 33 mit einem Umschalter 34 verbunden, mit dem jeweils einer der Prüfkopfanordnungen 6 bzw. 17 an das Ultraschallgerät 33 angeschlossen wird. Auf dem Bildschirm 35 des Ultraschallgerätes 33 können die von dem jeweils wirksamen Prüfkopf erfaßten Echosignale abgelesen werden. Sie können aber auch mit Hilfe eines Schreibers 36 ausgegeben werden, wie mit dem Blatt 37 des Schreibers dargestellt ist. Danach ist wiederum der Vergleich mit der in Fig. 3 gezeigten Echokennlinie möglich.

Bei diesem Ausführungsbeispiel soll der durch das Spiel zwischen Bolzen 1 und Öffnung 29 variierende Abstand der Prüfkopfe 6, 17 von der Bolzenoberfläche mit ausreichender Konstanz größer als das Doppelte der Wellenlänge von zum Beispiel 0,8 mm gehalten werden. Dazu kann man zur Zentrierung noch Keile oder ähnliche Spanneinrichtungen vorsehen, um Verfälschungen des Meßsignals durch seitliche Bewegung des Ringes 28 zu verhindern.

## Patentansprüche

1. Verfahren zur Ultraschall-Prüfung von Bolzen (1) mit einem Wanddickensprung (2) auf von diesem ausgehende Anrisse (5) mit einem Sender und einem Empfänger für Ultraschallwellen, dadurch gekennzeichnet, daß als Sender und Empfänger ein piezzoelektrischer Wandler (6) auf der dickeren Seite (3) des Bolzens (1) am Umfang so aufgesetzt wird, daß der Wanddickensprung (2) im Nahfeldbereich liegt, daß mit dem Wandler (6) Longitudinalwellen (8) mit einem Winkel (9) von 55 bis 70° und Transversalwellen (10) mit einem Winkel (11) von 25 bis 35° in Richtung auf den Wanddickensprung (2) eingestrahlt werden und daß die Intensität der reflektierten Transversalwellen und Longitudinalwellen mit einer Echokennlinie (13) verglichen wird, die mit einem dem zu prüfenden Bolzen (1) entsprechenden Probekörper mit Anrisse unterschiedlicher Tiefe simulierenden Nuten gewonnen wurde.

2. Verfahren zur Ultraschall-Prüfung von Bolzen (1) mit einem Wanddickensprung (2) auf von diesem ausgehende Anrisse (5) mit einem Sender (18) und einem Empfänger (19) für Ultraschallwellen, dadurch gekennzeichnet, daß ein Tandemprüfkopf (17) mit in Bolzenlängsrichtung hintereinanderliegendem Sender (18) und Empfänger (19) auf der dickeren Seite (3) des Bolzens (1) am Umfang so aufgesetzt wird, daß der Wanddickensprung (2) im Nahfeldbereich des Senders (18) und ein Reflexionspunkt an der gegenüberliegenden Bolzenoberfläche im Nahfeldbereich des Empfängers (19) liegt, daß mit dem Sender (18) Transversalwellen (22) unter einem Winkel (23) von 40 bis 70° in Richtung auf den Wanddickensprung (2) eingestrahlt werden und daß die Intensität einer reflektierten Transversalwelle (20) des Empfängers (19) mit einer Echokennlinie (25) verglichen wird, die mit einem dem zu prüfenden Bolzen (1) entsprechenden Probekörper mit Anrisse unterschiedlicher Tiefe simulierenden Nuten gewonnen wurde.

3. Vorrichtung zur Ausführung des Verfahrens nach Anspruch 1 oder 2, dadurch gekennzeichnet, daß mehrere Prüfköpfe (6, 17) zu einem Ring (28) zusammengefaßt sind, der eine den Bolzen (1) einschließende Öffnung (29) aufweist, daß der Ring (28) Mittel (29) zur Zentrierung an dem Bolzen (1) aufweist, mit denen der Abstand der Prüfköpfe (6, 17) von der Bolzenoberfläche konstant größer als das Doppelte der Wellenlänge gehalten wird, und daß der Ring (28) mit einem Ultraschallprüfgerät (33) über einem Umschalter (34) verbunden ist, der die einzelnen Prüfköpfe (6, 17) anzusteuern gestattet.

## Revendications

1. Procédé pour contrôler à l'aide d'ultrasons des goujons (1) présentant un saut (2) de l'épaisseur de paroi, en vue d'établir la présence de fissures issues dudit saut, avec un émetteur et un récepteur pour des ondes ultrasonores, caractérisé par le fait qu'en tant qu'émetteur et récepteur on monte un transducteur piézoélectrique (6) de telle manière sur la périphérie du côté le plus épais (3) du goujon (1), que le saut (2) de l'épaisseur de paroi se situe dans la zone du champ proche, qu'à l'aide du transducteur (6) on irradie en direction du saut (2) de l'épaisseur de paroi des ondes longitudinales sous un angle (9) de 55 à 70° et des ondes transversales (10) sous un angle (11) de 25 à 35°, et que l'intensité des ondes transversales et des ondes longitudinales réfléchies est comparée à une courbe caractéristique d'écho 13) qui a été établie à l'aide d'un corps de test qui correspond au goujon (1) à contrôler et qui est pourvu de gorges qui simulent des fissures de différentes profondeurs.

2. Procédé pour contrôler à l'aide d'ultrasons des goujons (1) présentant un saut (2) de l'épaisseur de paroi, en vue d'établir la présence de fissures issues dudit saut, avec un émetteur (18) et un récepteur (19) pour les ondes ultrasonores, caractérisé par le fait qu'une tête de contrôle tandem (17) comportant, l'un derrière l'autre dans le sens de la longueur du goujon, un émetteur (18) et un récepteur (19), est montée de telle façon sur la périphérie du côté le plus épais (3) du goujon, que le saut (2) de l'épaisseur de paroi se situe dans la zone du champ proche de l'émetteur (18) et qu'un point de réflexion sur la surface opposée du goujon se situe dans la zone du champ proche du récepteur (19), qu'avec l'émetteur (18) on irradie des ondes transversales (22), sous un angle (23) de 40 à 70°, en direction du saut (2) de l'épaisseur de paroi, et que l'intensité d'une onde transversale réfléchie (20) du récepteur (19) est comparée avec une courbe caractéristique d'écho (25) qui à été établie à l'aide d'on corps de test qui correspond au goujon (1) à contrôler et qui est pourvu de gorges qui simulent des fissures de différentes profondeurs.

3. Dispositif pour la mise en oeuvre du procédé selon la revendication 1 ou 2, caractérisé par le fait que plusieurs têtes de contrôle (6, 17) sont assemblées en une bague (28) qui comporte une ouverture (29) entourant le goujon (1), que la bague (28) comporte des moyens (29) pour le centrage par rapport au goujon (1), moyens à l'aide desquels la distance entre les têtes de contrôle (6, 17) et la surface du goujon est maintenue à une valeur supérieure au double de la longueur d'onde, et que la bague (28) est reliée à un appareil de contrôle à ultrasons (33), par l'intermédiaire d'un commutateur (34) qui permet d'attaquer les têtes de contrôle individuelles (6, 17).

## Claims

1. Process for the ultrasonic testing of bolts (1) with a discontinuity in wall thickness (2) for cracks (5) emanating from this discontinuity, having a transmitter and a receiver for ultrasonic waves, characterised in that a piezo-electric transducer (6), used as the transmitter and the receiver, is placed on the thicker side (3) of the bolt (1) on the periphery so that the wall thickness discontinuity (2) lies in the near-field region, in that with the transducer (6) longitudinal waves (8) are radiated at an angle (9) of 55 to 70°, and transverse waves (10) are radiated at an angle (11) of 25 to 35° in the direction of the wall thickness discontinuity, and in that the intensity of the reflected transverse waves and longitudinal waves is compared with an echo characteristic (13) which was obtained with a test body corresponding to the bolt (1) to be tested, having slots simulating cracks of different depths.

2. Process for the ultrasonic testing of bolts (1) with a discontinuity in wall thickness (2) for cracks (5) emanating from this discontinuity, having a transmitter (18) and a receiver (19) for ultrasonic waves, characterised in that a tandem testing head (17), with transmitter (18) and receiver (19) lying one behind the other in the longitudinal direction of the bolt, is placed on the periphery on the thicker side (3) of the bolt (1) so that the wall thickness discontinuity (2) lies in the near-field region of the transmitter (18), and a reflection point on the opposite bolt surface lies in the near-field region of the receiver (19), in that transverse waves (22) are radiated by the transmitter at an angle (23) of 40 to 70° in the direction of the wall thickness discontinuity (2) and in that the intensity of a reflected transverse wave (20) of the receiver (19) is compared with an echo characteristic (25) which was obtained with a test body corresponding to the bolt (1) to be tested, having slots simulating cracks of different depths.

3. Device for carrying out the process according to claim 1 or 2, characterised in that several test heads (6, 17) are combined to form a ring (28) which has an aperture (29) enclosing the bolt (1), in that the ring (28) has means for centering on the bolt (1), with which the distance of the test heads (6, 17) from the surface of the bolt is kept constantly greater than twice the wavelength, and in that the ring (28) is connected to an ultrasonic testing device (33) by means of a selector switch (34) which allows the individual test heads (6, 17) to be controlled.

FIG 1

FIG 2

FIG 3